# FASCICULE DE BREVET EUROPEEN

(11) **EP 0 799 573 B1**
(45) Date de publication et mention de la délivrance du brevet: **18.06.2003**
(21) Numéro de dépôt: 96200884.3
(22) Date de dépôt: 01.04.1996
(51) Int. Cl.: A23C 9/15, A23P 1/00, B01F 1/00

(54) **Procédé et dispositif de dissolution d'une poudre dans un liquide**
Verfahren und Vorrichtung zum Lösen von Pulver in einer Flüssigkeit
Process and apparatus for dissolving powder in a liquid

(43) Date de publication de la demande: 08.10.1997
(73) Titulaire: SOCIETE DES PRODUITS NESTLE S.A., 1800 Vevey (CH)
(72) Inventeur: Messerli, Alfred, 3506 Grosshoechstetten (CH)
(74) Mandataire: Thomas, Alain

(56) Documents cités:
- EP-A- 0 486 933
- DE-A- 2 429 393
- DE-A- 2 650 631
- GB-A- 512 092
- US-A- 2 975 038
- US-A- 3 816 427

## Description

L'invention concerne un procédé de dissolution en continu d'une matière pulvérulente dans un liquide ainsi que le dispositif pour la mise en oeuvre de ce procédé.

Il est important dans des installations de fabrique de disposer de systèmes de dissolution, par exemple de poudres de lait, car si on veut préparer un mélange de poudres ayant une composition constante dans le temps, il faut d'abord dissoudre ce mélange de poudres dans la proportion souhaitée et ensuite en faire un séchage par pulvérisation. On peut aussi envisager un remplissage sous forme liquide. Il existe déjà des systèmes de dissolution de matière pulvérulente. Le brevet US 3'816'427 concerne un procédé et un dispositif de dissolution en continu comportant un canal d'arrivée de poudre et une buse d'aspersion de liquide. Le problème avec ce dispositif est qu'il n'évite pas la formation de poussière, qu'il ne garantit pas que toute la poudre est bien mouillée et qu'il peut donc conduire à des phénomènes de bouchage en raison de formation de grumeaux. Le brevet DE 2650631 concerne également un dispositif de dissolution comportant un canal d'amenée de la poudre et une buse d'aspersion de liquide. L'inconvénient de ce système ainsi que celui du précédent système est qu'il amène lors de l'arrivée de la poudre une forte quantité d'air qu'il serait préférable d'éliminer pour éviter une trop grande augmentation du volume de la solution obtenue.

Le but de la présente invention est de mettre au point un procédé de dissolution dans lequel on minimise la formation de poussière lors de la dissolution, dans lequel on évite la formation de grumeaux et on garantit donc une bonne mouillabilité de la poudre traitée et dans lequel on évite les augmentations de volume de la solution obtenue.

L'invention concerne un procédé de dissolution en continu d'une matière pulvérulente dans un liquide, dans lequel on asperge la matière pulvérulente avec le liquide sous pression de manière radiale, on laisse le mélange et la dissolution s'effectuer, on évacue l'air résiduel et on recueille la solution.

Il est important que l'arrivée de liquide aille vers l'intérieur, car cela permet un mouillage uniforme de la poudre et évite par conséquent tout risque de formation de grumeaux et donc de blocage du système.

La matière pulvérulente traitée peut être de tout type. On envisage par exemple la poudre de lait maigre, écrémé et non écrémé, la poudre de caséine, la poudre de soja, la poudre de petit-lait et tout type de farine, par exemple la farine de soja. Comme déjà mentionné ci-dessus, on fait surtout une dissolution de mélange de poudres, par exemple un mélange de poudre de lait écrémé, poudre de protéines de petit lait et poudre de caséine.

Un autre intérêt du procédé selon l'invention est qu'on procède en continu en garantissant tout au long de la production une teneur constante en matière sèche. La teneur en matière sèche n'est pas critique et dépend surtout de la viscosité, de la solution finale: la solution doit rester pompable. Par exemple, la teneur en matière sèche peut varier entre 10 et 65% selon le type de poudre. Pour la poudre de caséine, on doit arriver à une teneur en matières sèches de max. 15% et pour la poudre de petit lait à max. 60%.

En général, la dissolution a lieu en une durée de l'ordre de la seconde.

Lors de l'arrivée de poudre dans le dispositif de dissolution, il y a toujours une certaine quantité d'air qui entre également. Il est important selon l'invention de se débarrasser au maximum de l'air présent : on effectue donc une évacuation de l'air résiduel. Ceci a également pour conséquence de minimiser la présence de mousse. On recueille ensuite la solution pour son utilisation subséquente, à savoir la concentration et le séchage par pulvérisation ou autre.

Pour obtenir une bonne dissolution de la poudre, il est aussi important que le liquide arrive sous pression. Le liquide est normalement de l'eau, mais pourrait être également du lait. La pression de liquide est comprise entre 1 et 10 bar, de préférence de 2 à 4 bar.

La température à laquelle on injecte le liquide n'est pas critique. On opère normalement à une température comprise entre 10 et 90°C, de préférence entre 30 et 40°C.

Pour obtenir une bonne dissolution de la poudre, il faut introduire la matière pulvérulente et l'eau dans un rapport constant.

L'invention concerne également le dispositif pour la mise en oeuvre du procédé décrit ci-dessus. Ce dispositif comprend disposés verticalement une conduite d'amenée de matière pulvérulente, une buse d'amenée de liquide disposée de manière concentrique par rapport à ladite conduite et comprenant une pluralité d'ouvertures régulièrement réparties, un tube de mélange, une colonne de réception comprenant une plaque de déviation concentrique avec le tube de mélange, un tube d'évacuation d'air disposé sous ladite plaque et un tube pour l'évacuation de la solution.

Le grand avantage du dispositif selon l'invention est qu'il permet de travailler en continu sans risquer de provoquer des blocages par la formation de grumeaux. On peut opérer jusqu'à une semaine avant d'effectuer un nettoyage.

L'arrivée de liquide se fait par une buse comportant des ouvertures autour de la colonne d'arrivée de poudre. Ces trous uniformément répartis doivent être suffisamment petits pour permettre d'une part une bonne aspiration de ladite poudre et un bon mouillage. Ces trous sont inclinés de manière à ce que l'eau aille vers le centre de la colonne de poudre. Une seconde rangée d'ouvertures est disposée à côté de cette première rangée permettant également l'arrivée de liquide. La fonction de cette seconde rangée d'ouvertures est de permettre un lavage du tube de mélange, de manière à bien garantir que de la poudre ne va pas rester coller contre les parois. Le nombre d'ouverture de cette seconde rangée est moins élevé que celui de la première rangée. La dimension de ces secondes ouvertures est la même. Ces ouvertures sont dirigées plutôt vers les parois du tube de mélange.

L'alimentation des deux rangées est la même et donc à la même pression. Pour la première rangée d'ouvertures, on prévoit entre 50 et 100 ouvertures. La seconde rangée comporte environ la moitié d'ouvertures. La taille des ouvertures n'est pas critique, est adaptée au débit de l'eau et doit permettre de garantir une pression comprise entre 1 et 10 bar. On travaille normalement avec un débit d'eau compris entre 1'000 et 10'000 l/heure.

De manière à créer un bon effet de turbulence et par conséquent un mouillage efficace et rapide de la poudre, il est prévu dans le tube de mélange des chicanes de répartition de liquide. Ces chicanes ne sont pas critiques quant à leur forme et leur nombre.

La colonne de réception comporte une plaque de déviation de manière à écarter le produit en solution du centre, dégageant ainsi le tube d'aspiration d'air disposé en dessous. Dans un premier mode de réalisation, le bas de la colonne de réception comporte un tube pour l'évacuation de la solution. Ce tube est coudé, de manière à créer un niveau de liquide dans la colonne de réception, ce qui isole ladite colonne de l'extérieur, évitant d'une part à la mousse de sortir et permettant un bon dégazage par le tube d'aspiration d'air. L'évacuation d'air se fait ainsi sans aucun recours à une pompe annexe. La solution s'écoule progressivement du tube d'évacuation et tombe dans le conteneur principal, d'où elle est amenée à l'aide d'une pompe vers son site d'utilisation, à savoir la concentration, le séchage par pulvérisation ou le remplissage liquide. Dans un second mode de réalisation, le tube pour l'évacuation de la solution est relié directement à une pompe qui amène ladite solution au site de concentration et de séchage. Un niveau est maintenu automatiquement à la sortie avec des moyens connus.

Le tube d'aspiration d'air a une ouverture de préférence dentelée, car cela permet une meilleure séparation entre le liquide et l'air sortant.

Le dispositif selon l'invention ne nécessite aucun système de recirculation de liquide, ce qui augmente donc son efficience. Il peut être d'autre part disposé dans une installation hautement hygiénique.

La suite de la description est faite en référence aux dessins sur lesquels :

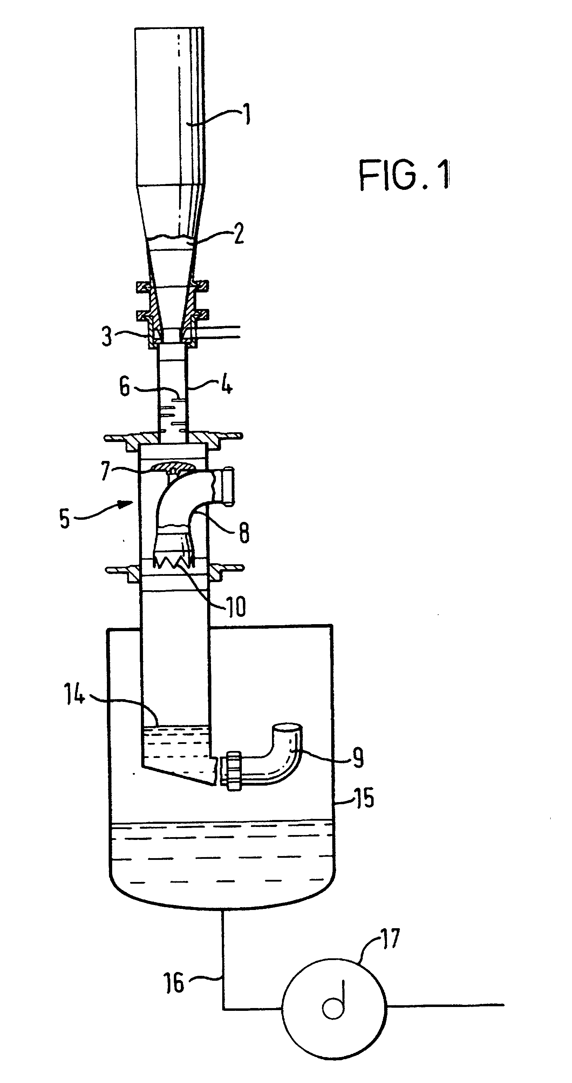

Fig. 1 est une représentation schématique du dispositif selon l'invention,
Fig. 2 est une vue agrandie de la buse d'arrivée de liquide et
Fig. 3 est une coupe selon la ligne 3-3 de la figure 2.

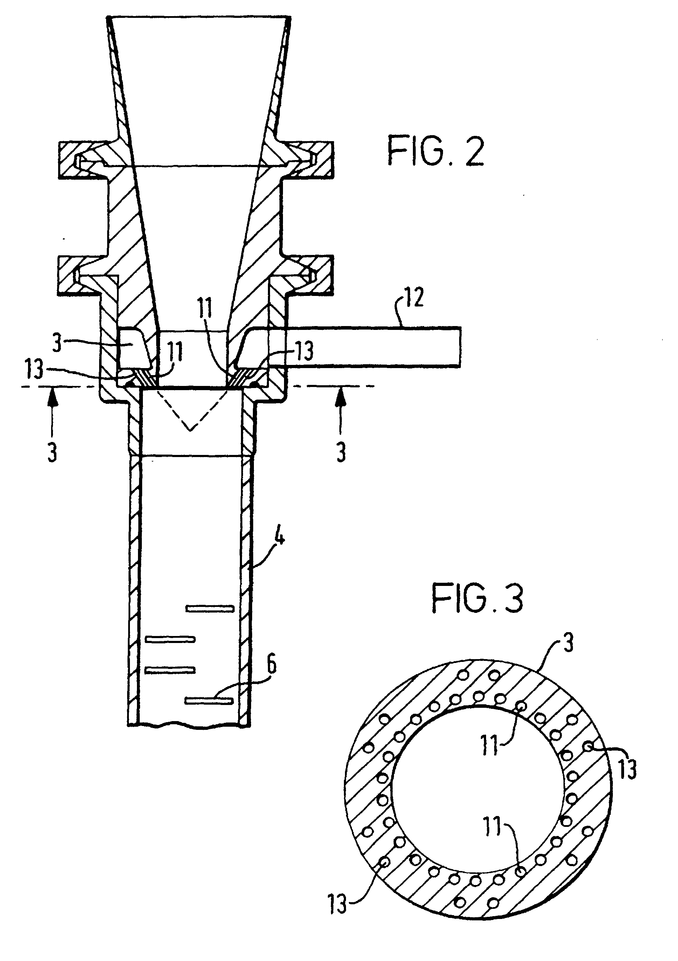

Le dispositif comprend une conduite (1) d'amenée de matière pulvérulente (2), une buse (3) d'amenée de liquide, un tube de mélange (4) et une colonne de réception (5). Le tube de mélange (4) comporte des chicanes (6) de répartition de liquide. La colonne de réception comporte une plaque de déviation (7), un tube d'aspiration d'air (8) et un tube (9) pour l'évacuation de la solution. Le tube (9) est coudé et l'ouverture du tube d'aspiration d'air (8) présente des dentelures (10). Les figures 2 et 3 permettent de mieux mettre en évidence la buse (3) d'amenée de liquide : elle comporte des ouvertures (11) amenant l'eau depuis la conduite d'arrivée (12) sur la poudre (2) à dissoudre. La deuxième rangée d'ouvertures (13) permet d'éviter tout collage de poudre contre la paroi du tube de mélange (4). La plaque de déviation (7) est bien au centre de la colonne de réception (5) : elle ne doit pas avoir un diamètre trop grand, pour ne pas trop freiner la descente de la solution.

Le dispositif fonctionne de la manière suivante :
La conduite (1) déverse la matière pulvérulente (2) à dissoudre dans le liquide. Le liquide arrive par la conduite (12) à une pression comprise entre 2 et 4 bar, traverse les ouvertures (11) et rencontre le flux de matière pulvérulente. Le liquide humecte la poudre de manière bien uniforme et la dissout. A la sortie du tube de mélange, la poudre est totalement dissoute. La rangée d'ouvertures (13) dégage bien les parois du tube (4) et les chicanes (6) créent une turbulence garantissant une bonne solubilisation.

La masse de solution va contre la plaque de déviation (7) et évite ainsi le tube d'évacuation d'air : elle forme un niveau (14) en relation avec la hauteur du tube coudé (9). Cette obturation permet une bonne séparation de l'air par le tube (8). La solution coule progressivement dans le conteneur (15) et est évacuée à l'aide de la pompe (17) par la canalisation (16) vers le séchage ou le remplissage liquide.

La température à laquelle on opère dépend des constituants à dissoudre. Le plus souvent le liquide est chauffé et la matière pulvérulente est à température ambiante.

L'appareil est particulièrement approprié à la reconstitution de mélange de poudre à partir de poudre de lait et d'autres composants. Son usage n'est cependant pas limité aux produits alimentaires et il peut servir à dissoudre des produits chimiques ou mélanger des produits en poudre fine avec des liquides.

## Revendications

1. Procédé de dissolution en continu d'une matière pulvérulente dans un liquide, dans lequel on asperge la matière pulvérulente avec le liquide sous pression de manière radiale, on laisse le mélange et la dissolution s'effectuer, on sépare l'air résiduel et on recueille la solution.

2. Procédé selon la revendication 1, dans lequel le liquide est de l'eau ou du lait arrivant à une pression comprise entre 1 et 10 bar.

3. Procédé selon l'une des revendications 1 ou 2, dans lequel le liquide est aspergé à une température comprise entre 10 et 90°C.

4. Dispositif pour la mise en oeuvre du procédé selon l'une des revendications 1 à 3, comprenant disposés verticalement une conduite d'amenée de matière pulvérulente, une buse d'amenée de liquide disposée de manière concentrique par rapport à ladite conduite et comprenant une pluralité d'ouvertures régulièrement réparties, un tube de mélange, une colonne de réception comprenant une plaque de déviation concentrique avec le tube de mélange , un tube d'évacuation d'air disposé sous ladite plaque et un tube pour l'évacuation de la solution.

5. Dispositif selon la revendication 4, dans lequel la buse d'amenée de liquide comprend une seconde rangée d'ouvertures disposée à côté de la première, le nombre d'ouvertures de cette seconde rangée étant moins élevée que celui de la première.

6. Dispositif selon l'une des revendications 4 ou 5, dans lequel le nombre d'ouverture de la buse d'amenée de liquide est compris entre 50 et 100.

7. Dispositif selon l'une des revendications 4 à 6, dans lequel le tube pour l'évacuation de la solution est coudé.

8. Dispositif selon l'une des revendications 4 à 7, dans lequel le tube pour l'évacuation de la solution est relié directement à une pompe avec maintien automatique du niveau.

9. Dispositif selon l'une des revendications 4 à 8, dans lequel le tube de mélange comporte des chicanes de répartition de liquide.

10. Dispositif selon l'une des revendications 4 à 9, dans lequel le tube d'évacuation d'air a une ouverture dentelée.

## Patentansprüche

1. Verfahren zum kontinuierlichen Auflösen eines pulverförmigen Materials in einer Flüssigkeit, bei dem man das pulverförmige Material mit der Flüssigkeit unter Druck radial besprüht, die Mischung und die Auflösung stattfinden läßt, die Restluft abtrennt und die Lösung gewinnt.

2. Verfahren nach Anspruch 1, bei dem die Flüssigkeit Wasser oder Milch ist und mit einem Druck zwischen 1 und 10 bar eintritt.

3. Verfahren nach einem der Ansprüche 1 oder 2, bei dem die Flüssigkeit mit einer Temperatur zwischen 10 und 90°C gesprüht wird.

4. Vorrichtung zur Durchführung des Verfahrens nach einem der Ansprüche 1 bis 3, umfassend die folgenden, vertikal angeordneten Elemente: eine Leitung zur Zufuhr des pulverförmigen Materials, eine Düse zur Flüssigkeitszufuhr, die zur Leitung konzentrisch angeordnet ist und eine Vielzahl von regelmäßig verteilten Öffnungen aufweist, ein Mischrohr, eine Aufnahmesäule mit einer zum Mischrohr konzentrischen Ablenkplatte, ein unter der Platte angeordnetes Rohr zur Luftabfuhr und ein Rohr zur Abführung der Lösung.

5. Vorrichtung nach Anspruch 4, bei der die Düse zur Flüssigkeitszufuhr eine zweite Reihe von Öffnungen aufweist, die neben der ersten angeordnet ist, wobei die Anzahl von Öffnungen dieser zweiten Reihe weniger hoch als die der ersten ist.

6. Vorrichtung nach einem der Ansprüche 4 oder 5, bei der die Anzahl von Öffnungen der Düse zur Flüssigkeitszufuhr zwischen 50 und 100 beträgt.

7. Vorrichtung nach einem der Ansprüche 4 bis 6, bei der das Rohr zur Abführung der Lösung gebogen ist.

8. Vorrichtung nach einem der Ansprüche 4 bis 7, bei der das Rohr zur Abführung der Lösung direkt mit einer Pumpe verbunden ist, wobei der Stand automatisch gehalten wird.

9. Vorrichtung nach einem der Ansprüche 4 bis 8, bei der das Mischrohr Umlenkelemente zur Verteilung der Flüssigkeit aufweist.

10. Vorrichtung nach einem der Ansprüche 4 bis 9, bei der das Rohr für die Luftabfuhr eine gezahnte Öffnung besitzt.

## Claims

1. Method for continuously dissolving a powdered material in a liquid, wherein the powdered material is sprinkled radially into the liquid under pressure, mixing and dissolution is allowed to occur, residual air is separated off and the solution is recovered.

2. Method according to claim 1, wherein the liquid is water or milk arriving at a pressure of between 1 and 10 bar.

3. Method according to either of claims 1 or 2, wherein the liquid is sprinkled at a temperature of between 10 and 90°C.

4. Device for implementing the method according to one of claims 1 to 3 comprising, a vertically positioned pipe for delivering the powdered material, a nozzle for delivering liquid positioned concentrically with respect to the said pipe and comprising a plurality of regularly distributed openings, a mixing tube, a receiving column including a deflector plate concentric with the mixing tube, an air extraction tube positioned under the said plate and a tube for extracting the solution.

5. Device according to claim 4, wherein the nozzle for introducing the liquid comprises a second row of openings positioned by the side of the first, a number of openings for this second row being smaller than that of the first.

6. Device according to either of claims 4 or 5, wherein the number of openings of the nozzle for introducing liquid is between 50 and 100.

7. Device according to one of claims 4 to 6, wherein the tube for extracting the solution is elbowed.

8. Device according to one of claims 4 to 7, wherein the tube for extracting the solution is directly connected to a pump with automatic level maintenance.

9. Device according to one of claims 4 to 8, wherein the mixing tube includes baffles for distributing the liquid.

10. Device according to one of claims 4 to 9, wherein the tube for extracting air has a toothed opening.
